(19) Europäisches Patentamt / European Patent Office / Office européen des brevets

(11) **EP 3 309 682 B1**

(12) **EUROPEAN PATENT SPECIFICATION**

(45) Date of publication and mention of the grant of the patent:
**01.04.2020 Bulletin 2020/14**

(51) Int Cl.:
**G06F 11/34** *(2006.01)*  **G06F 11/30** *(2006.01)*
**G05B 23/02** *(2006.01)*

(21) Application number: **15894895.0**

(86) International application number:
**PCT/JP2015/066534**

(22) Date of filing: **09.06.2015**

(87) International publication number:
**WO 2016/199210 (15.12.2016 Gazette 2016/50)**

(54) **DATA COLLECTION SYSTEM AND METHOD, AND METHOD FOR REDUCING THE QUANTITY OF MEASUREMENT DATA**

DATENERFASSUNGSSYSTEM UND VERFAHREN SOWIE VERFAHREN ZUR VERMINDERUNG DER MENGE AN MESSDATEN

SYSTÈME ET PROCÉDÉ DE COLLECTE DE DONNÉES, ET PROCÉDÉ POUR RÉDUIRE LA QUANTITÉ DE DONNÉES DE MESURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.04.2018 Bulletin 2018/16**

(73) Proprietor: **Hitachi, Ltd.**
**Tokyo 100-8280 (JP)**

(72) Inventors:
• **KAMEYAMA, Tatsuya**
  **Tokyo 100-8280 (JP)**
• **YUMBE, Yoshiki**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 2 750 041**      **WO-A1-2015/072280**
**JP-A- 2002 180 502**    **JP-A- 2013 061 840**
**JP-A- 2015 088 079**    **US-A1- 2013 097 128**
**US-A1- 2014 195 184**

**Description**

TECHNICAL FIELD

The present invention relates to a method of reducing a data amount in a system in which chronological measurement data of a state, damage, or the like of structures such as mechanical systems is collected, and the measurement data is stored in a server device via a communication line.

BACKGROUND ART

Power generation devices such as wind power generation devices and thermal power generation devices or construction machines such as shovels or dump trucks operated in mines (hereinafter referred to as "mechanical systems") are continuously operated regardless of day and night. Therefore, when an abnormality such as a failure or damage occurs, it is stopped for repair, leading to a large loss. Further, when an accident occurs, other mechanical systems operating in the same environment or mechanical systems of the same type in which the accident occurs have to be stopped to prevent the recurrence until the cause of the accident is clarified to prevent the recurrence, and thus a large loss occurs.

Therefore, it is important to carry out a smooth repair and prevent the occurrence of a failure, damage, or an accident in advance since a repair cost and a time loss caused by suspension of a mechanical system are reduced, and profits obtained by an improvement in an operation rate are increased.

In order to carry out a smooth repair, it is necessary to detect a situation at the time of a failure or damage, procure appropriate parts, and perform a repair work promptly. To this end, it is necessary to clarify the cause of a failure or damage. Further, in order to prevent a similar failure, damage, or an accident in advance, it is necessary to clarify the cause of the failure, the damage, or the accident, and it is possible to carry out a smooth repair and prevent a failure, damage, or an accident in advance by using it for failure or damage cause countermeasures at the time of design or preventive countermeasures for a failure or damage of mechanical systems being operated.

In order to clarify the cause of a failure, damage, or an accident, it is necessary to measure states, damage, or the like of mechanical systems being operated and perform an investigation using measurement data. A failure, damage, or an accident of the mechanical system does not occur suddenly but occurs as damage is accumulated little by little. Therefore, in order to clarify the cause, it is necessary to store the measurement data going back in time from the occurrence of a failure, damage, or an accident.

The states of the mechanical systems operating in operation sites regardless of domestic or overseas, and the measurement data is stored in server devices installed in the operation sites via a communication network. The measurement data stored in the server devices installed in the operation sites is collected by the center device, and an investigation for the cause of a failure or damage is carried out. When the investigation is concentratedly carried, a reduction in an investigation cost such as a reduction in the number of investigators who conduct the investigation of the cause can be expected. Further, the technical strength of the investigation of the cause can be expected to be improved by a comparison of sites in the investigation of the cause.

However, for example, wind power generation devices are often installed in remote areas in which a communication environment is not equipped. Further, dump trucks or the like are also operated in mines such as coal mines, and a communication environment is not established in many cases. Therefore, there is a problem in that a communication band from a local work environment to a center device is restricted, and a communication cost is high.

Furthermore, in a maintenance service, several tens of thousands of pieces of operation data per site are collected per second. When the operation data is transmitted to the server without change, a data amount of several gigabytes is transmitted every day, and several gigabytes of data are accumulated in a storage of the server every day. Therefore, a terabyte storage is necessary, and it is desirable to store data of several years in a storage for a maintenance service under normal circumstances, but there is a problem in that data stored a few months ago should be deleted. As the number of operating mechanical systems increases, and the function of the mechanical system is advanced, the number of installed sensors increases, and a transmission data amount or a storage amount necessary for storage further increases accordingly.

As a method of reducing a data amount, a compression method of calculating an error of an abnormality sign of uncompressed data at the time of compression and compressing data when the error is less than a reference is proposed in Patent Document 1.

Further, a method of adjusting transmission intervals in accordance with a change in a failure probability over time in order to reduce a communication load and reducing a communication load is proposed in Patent Document 2.

CITATION LIST

PATENT DOCUMENT

Patent Document 1: US 2013/0097128
Patent Document 2: JP 2002-180502 A

In US 2014/195184 A1 an anomaly detection and diagnosis method are described. An anomaly detection is carried out using operating information such as the operating time of an equipment and output signals from a plurality of sensors dependent on the equipment. Maintenance logs, such as written procedure reports, are targeted to make associations between detected anomalies and counter measures and create links between anomaly detection and past maintenance logs.

## SUMMARY OF THE INVENTION

## PROBLEMS TO BE SOLVED BY THE INVENTION

In the technique disclosed in Patent Document 1, high compression is performed under normal circumstances, and under abnormal circumstances, compression is not performed when an error between an abnormality sign detection result using compressed data and an abnormality sign detection result using uncompressed data is determined to be an allowable value or more using an abnormality sign diagnosis technique, and thus it is possible to reduce a data mount while preventing loss of data necessary for the maintenance service without degrading an accuracy of abnormality sign detection.

However, when data compression is performed on the basis of an abnormality sign diagnosis result, it is effective when a phenomenon serving as an abnormality sign is clarified, but when a phenomenon serving as an abnormality sign is unclear, data necessary for the maintenance service is likely to be lost.

In this regard, it is an object of the present invention to provide a technique of reducing a data amount and preventing loss of data necessary for the maintenance service.

## SOLUTIONS TO PROBLEMS

To solve the problems, the features of the independent claims 1 and 9 are suggested. Preferred developments are in the dependent claims. Provided is a data collection system including a data receiving unit that acquires a chronological measurement value acquired from at least one sensor, an abnormality degree calculating unit that calculates an abnormality degree on the basis of the measurement value, an abnormality detecting unit that detects an abnormality on the basis of the abnormality degree, an abnormality frequency measuring unit that measures an abnormality frequency on the basis of the detected abnormality, a remaining lifespan calculating unit that calculates a remaining lifespan on the basis of the abnormality degree, and a data period setting unit that controls a data period on the basis of the abnormality frequency and the remaining lifespan. The data collection system further includes at least one of (1) a transmitting unit that transmits the measurement value in the data period and (2) a data storage unit that stores the measurement value in the data period.

Hereinafter, for example, the data period can be defined as a period from a measurement (acquisition) start timing of data which is a chronological measurement value to a measurement (acquisition) end timing. Further, when the measurement value can be used as an abnormality value without change, the data receiving unit doubles as the abnormality degree calculating unit.

According to a specific example, the data period setting unit controls the data period by selecting from a plurality of predetermined data periods.

According to another specific example, the abnormality detecting unit is configured to determine the presence or absence of an abnormality by comparing the abnormality degree with a threshold value, and the data period setting unit controls the threshold value of the abnormality detecting unit and sets, as the data period, a period from a timing at which the abnormality value is larger than the controlled threshold value to a timing at which the abnormality value is smaller than the controlled threshold value.

In another specific example, a data collecting device including the data receiving unit, the abnormality degree calculating unit, the abnormality detecting unit, the abnormality frequency measuring unit, the remaining lifespan calculating unit, the data period setting unit, and the transmitting unit is provided. The transmitting unit transmits the measurement value in the data period to a center device connected via a communication line.

In another specific example, a data collecting device including the data receiving unit and the data collecting device is provided. Further, a center device including the abnormality degree calculating unit, the abnormality detecting unit, the abnormality frequency measuring unit, the remaining lifespan calculating unit, and the data period setting unit is provided. The transmitting unit of the data collecting device transmits the measurement value to the center device connected via a communication line. The center device includes a center side receiving unit that receives the transmitted measurement value, a temporary storage unit that stores the received measurement value, a selecting unit that selects a measurement value in a data period set by the data period setting unit among measurement values stored in the temporary storage unit, and a data storage unit that stores the measurement value selected by the selecting unit.

According to another aspect of the present invention, provided is a data collection method of collecting chronological measurement data from one or more sensors installed in a device. The method includes a first step of receiving measurement data from the sensors, a second step of calculating an abnormality degree from the inputted measurement data, a third step of calculating a remaining lifespan of the device from the abnormality degree, a fourth step of detecting an abnormality from the abnormality degree, a fifth step of determining one of predetermined periods corresponding to the remaining lifespan calculated in the third step, a sixth step of calculating a frequency of the abnormality detected in the fourth step, and a seventh step of controlling at least one of a data period of the measurement data to be transmitted and a data period of the measurement data to be stored on the basis of both the period determined in the fifth step and the frequency of the abnormality calculated in the sixth step. When the measurement value can be used as the abnormality value without change, the first step doubles as the second step.

In a specific configuration example, the seventh step includes controlling the data period by selecting a data period to be applied from data periods which are set in advance.

In another specific configuration example, the seventh step includes controlling a threshold value for performing abnormality detection in the fourth step and controlling the data period such that measurement data corresponding to the detected abnormality is included.

According to another example, useful for understanding the invention, provided is a measurement data amount reduction method of performing failure sign diagnosis and lifespan diagnosis on measurement data collected from one or more sensors installed in a device through an input device using at least a processing device and a storage device using an information processing device including the input device, the processing device, the storage device, and an output device and managing reduction of the measurement data using a diagnosis result. The method includes retaining the measurement data when the failure sign is detected and deciding at least one of a retention period and a transmission period of the measurement data in accordance with a remaining lifespan of a lifespan diagnosis result and taking into consideration a result of the failure sign diagnosis in the decision.

For the lifespan diagnosis, for example, a stress waveform serving as the measurement data can be used.

According to another example, useful for understanding the invention, in the measurement data amount reduction method, a failure probability is obtained on the basis of a remaining lifespan including damage of a mechanical system and an abnormality detection frequency, and when the failure probability is high, a period in which measurement data going back from an abnormality detection time of measurement data is stored or transmitted is increased, and when the failure probability is low, the period in which the measurement data going back from the abnormality detection time of the measurement data is stored or transmitted is decreased.

EFFECTS OF THE INVENTION

According to the present invention, when a failure probability is high, it is possible to suppress loss of measurement data necessary for the maintenance service, and when a failure probability is low, it is possible to reduce a communication amount and a storage amount.

Problems, configurations, and effects which are not mentioned above will be apparent by description of the following embodiments.

BRIEF DESCRIPTION OF THE DRAWINGS

Fig. 1 is a graph illustrating a relation between an operating time and a failure probability.
Fig. 2 is a graph illustrating a relation between an operating time and measurement data selection period.
Fig. 3 is a graph illustrating a measurement data selection period in a second period.
Fig. 4 is a block diagram of a configuration example of a wind power system.
Fig. 5 is a block diagram of a configuration example of a measurement data collection system.
Fig. 6 is an operation flowchart of a period setting unit according to a first embodiment.
Fig. 7 is an explanatory diagram of a remaining lifespan calculation.
Fig. 8 is a graph illustrating a setting example of an abnormality detection period according to a cumulative damage degree.
Fig. 9 is a plane view of an example of a screen of an operating/display unit.
Fig. 10 is a graph chart of a threshold value setting example for second embodiment.
Fig. 11 is a flow chart illustrating an example of a processing procedure according to a second embodiment.
Fig. 12 is a block diagram of a configuration example of a measurement data collection system according to a third embodiment.

MODE FOR CARRYING OUT THE INVENTION

Hereinafter, embodiments will be described with reference to the appended drawings. However, the present invention is not to be interpreted as being limited to description of embodiments to be described below. It will be easily understood by those skilled in the art that a specific configuration of the present invention can be changed within the scope of the present invention.

In a configuration of the invention to be described below, parts having the same or similar function are denoted by the same reference numerals in different drawings, and repeated description will be omitted.

In this specification or the like, notations such as "first," "second," and "third" are added to identify components and do not necessarily limit numbers or an order. Further, numbers identifying components are used for each context, and numbers used in one context do not necessarily indicate the same components in other contexts. Further, a component identified by a certain number is not prevented from doubling as a function of a component identified by another number.

Positions, sizes, shapes, ranges, and the like of respective components illustrated in the drawings or the like are used in order to facilitate understanding of the invention and may not indicate actual positions, sizes, shapes, ranges, and the like. Therefore, the present invention is not necessarily limited to the positions, the sizes, the shapes, the ranges, and the like disclosed in the drawings or the like.

[First embodiment]

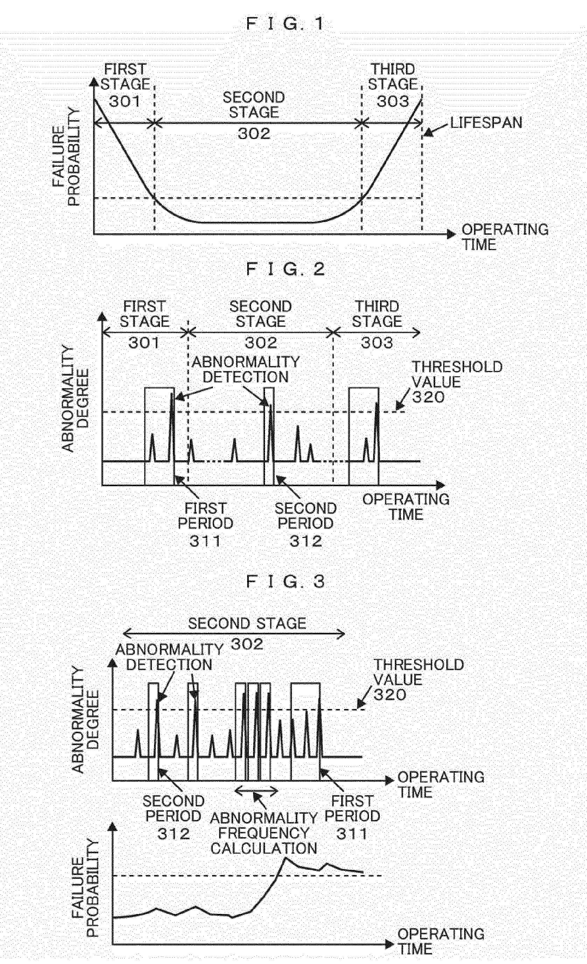

A first embodiment will be described with reference to Figs. 1 to 9.

Fig. 1 is a graph illustrating a relation between an operating time and a failure probability. Referring to Fig. 1, a failure probability of products such as mechanical systems varies depending on the operating time. A first stage 301 having a long remaining lifespan at the time of operation start is a period in which there are many initial defects due to assembly problems or the like and has a high failure probability. The failure probability decreases over time, and the failure probability is stabilized to be low in a second stage 302. A third stage 303 having a short remaining lifespan which is a late period in the operating time is a period in which a fatigue of each part accumulates, and a failure probability of each part increases.

Fig. 2 is a graph illustrating a relation between the operating time and a measurement data selection period. Referring to Fig. 2, an abnormality is detected when an abnormality degree exceeds a threshold value 320. The measurement data indicating the abnormality degree is a value which is calculated from temperature data or temperature data, and, for example, the threshold value is set to 200°C, and when the threshold value is exceeded, it is recognized as an abnormality, and an abnormality is detected.

A first period 311 and a second period 312 are examples of a period in which the measurement data is transmitted. The first period 311 and the second period 312 has a relation of "first period 311 > second period 312."

In the first stage 301 and the third stage 303 in which the failure probability is high, the first period 311 is set when an abnormality is detected. In the second stage 302 in which the failure probability is low, the second period 312 is set when an abnormality is detected.

Fig. 3 is a graph illustrating the measurement data selection period in the second stage 302. Referring to Fig. 3, when the abnormality degree exceeds the threshold value 320, and an abnormality is detected, the second period 312 is set. When the number of detections of abnormality exceeds an upper limit of the number of detections of abnormality in a frequency evaluation period, the failure probability is regarded as having increased, and the first period 311 is set.

As described above, in the present embodiment, the period in which the measurement data is transmitted is set in view of both the remaining lifespan and the abnormality frequency. In the above example, two types of periods, that is, the relatively long first period and the relatively short second period are set, but the periods may be set more finely. For example, the data transmission period of the second period may be set to be larger than the data transmission period of the first period. Alternatively, the data transmission period may be changed on the basis of the above frequency coefficient value.

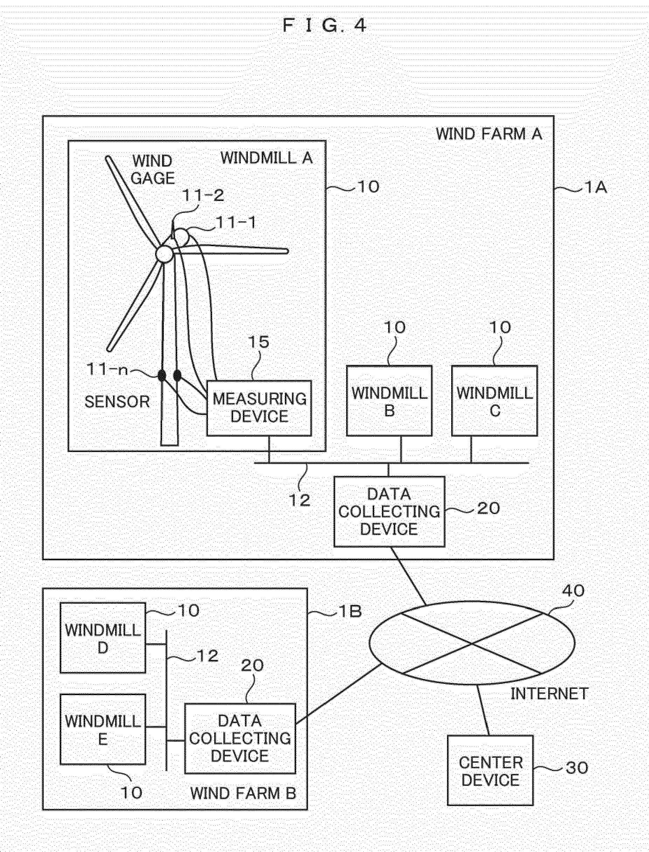

Fig. 4 illustrates a configuration example of a wind power system. Referring to Fig. 4, at least one windmill 10 is installed in each of one or more wind farms 1A to 1B. Sensors are attached to each windmill and acquire a measurement value indicating a damage degree such as distortion of each part of a windmill tower, a measurement value indicating a state such as the number of revolutions or a position of a motor, a measurement value indicating an environmental state at the time of operation such as a wind direction or a wind speed, an operating time, and the like.

The measurement values acquired by sensors 11-1 to 11-n of a wind farm 1 are chronologically collected by a measuring device 15 for each windmill. The measurement data collected by the measuring device 15 of each windmill 10 in the wind farm 1A is collected by a data collecting device 20 via a communication line 12. Further, the measurement data collected by the data collecting devices of the wind farms 1A and 1B is transmitted from the data collecting device 20 to a center device 30 via a network 40 and stored.

The communication line 12 is a short-range communication in the wind farm and configured with a wireless line such as a wireless LAN or ZigBee (a registered trademark), a wired line such as a wired LAN, or a combination thereof but may be configured with other communication lines.

The network 40 is a wide area communication, for example, a portable radio network, a dedicated line, a fixed telephone network, or a combination thereof but may be configured with other networks.

The two wind farms 1A and 1B are illustrated as the wind farm in Fig. 4, but the number of wind farms is not limited. Further, the number of windmills 10 operated in the wind farm is not limited. In the wind farm, one data collecting device 20 is illustrated, but the number of data collecting devices is not limited.

Further, input data of the measuring device 15 is acquired by the sensors 11-1 to 11-n, but a plurality of measuring devices 15 may be provided. The input of the measuring device 15 is not limited to sensor information but may be a state of a device or event data such as an alarm. A type of measurement data collected by the measuring device 15 is not limited.

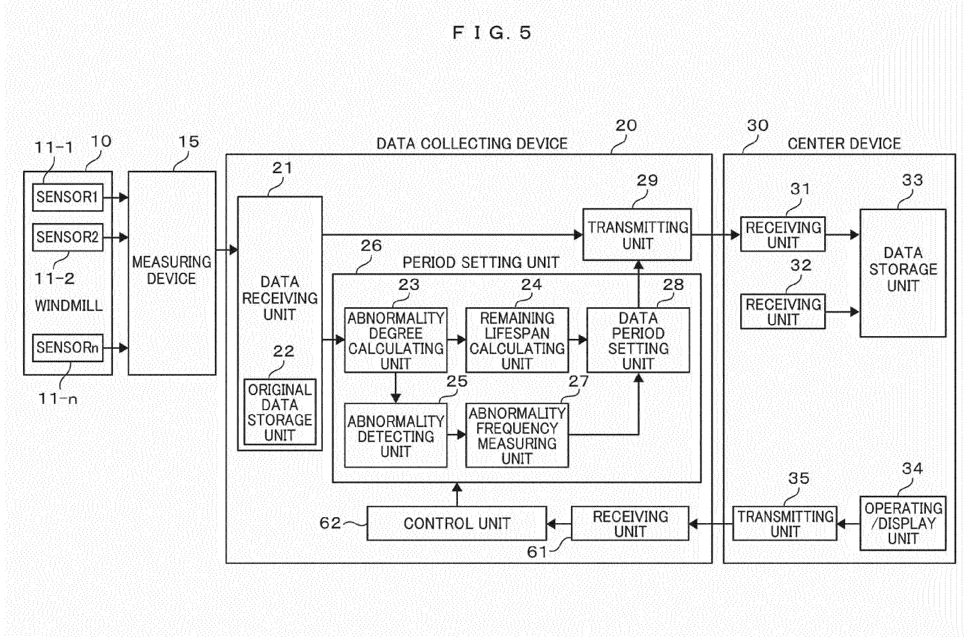

Fig. 5 illustrates a configuration example of the measurement data collection system.

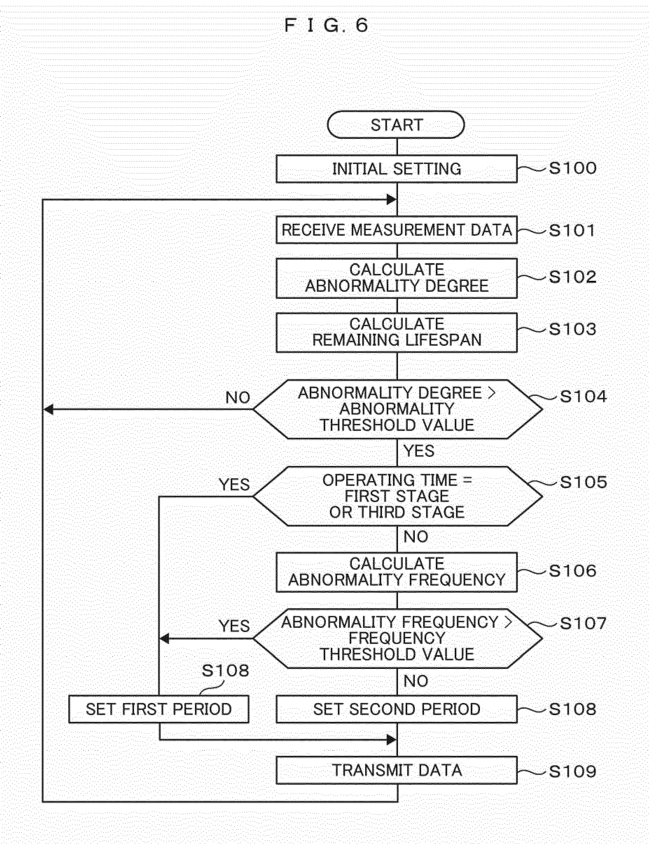

Fig. 6 is a flowchart illustrating an example of a processing procedure of a period setting unit.

Referring to Fig. 5, the data collecting device 20 includes a data receiving unit 21, a transmitting unit 29, a receiving unit 61, a control unit 62, and a period setting unit 26. The transmitting unit 29 and the receiving unit 61 have known communication functions for performing communication with the center device 30 via, for example, the Internet 40.

The data receiving unit 21 receives the measurement data which is measured by the sensors 11-1 to 11-n via the measuring device 15 and the communication line 12. The data receiving unit 21 includes an original data storage unit 22 and stores the measurement data in the original data storage unit 22.

As a hardware configuration, the control unit 62 and the period setting unit 26 may be constituted by a computer or a server equipped with a processing device, an input device, an output device, and a storage device. In a typical example, each part of the period setting unit 26 may be implemented by controlling hardware of the computer with software.

In the present embodiment, however, a function equivalent to a function configured by software can also be implemented by hardware such as field programmable gate array (FPGA) or application specific integrated circuit (ASIC). Such an aspect is not excluded.

The period setting unit 26 includes an abnormality degree calculating unit 23, a remaining lifespan calculating unit 24, an abnormality detecting unit 25, an abnormality frequency measuring unit 27, and a data period setting unit 28.

The center device 30 includes a receiving unit 31, a receiving unit 32, a data storage unit 33, an operating/display unit 34, and a transmitting unit 35.

In the data collecting device 20, the data receiving unit 21 chronologically receives the measurement values acquired by the sensors 11-1 to 11-n in the windmill 10 by the measuring device 15, and stores the received measurement data in the original data storage unit 22.

The abnormality degree calculating unit 23 reads the measurement data stored in the original data storage unit 22, calculates the abnormality degree, and outputs the abnormality degree. Of course, the measurement data may be used as the abnormality degree without change.

The remaining lifespan calculating unit 24 receives the abnormality degree, calculates a remaining lifespan from the abnormality degree, and outputs the remaining lifespan.

The abnormality detecting unit 25 receives the abnormality degree, compares the abnormality degree with the threshold value 320 which is set in advance, and detects and outputs an abnormality (alarm).

The abnormality frequency measuring unit 27 receives the abnormality (alarm) detected by the abnormality detecting unit 25, measures the number of abnormalities (alarms), calculates an abnormality frequency, and outputs the abnormality frequency.

Each time the abnormality (alarm) is detected, the data period setting unit 28 receives the remaining lifespan calculated by the remaining lifespan calculating unit 24 and the abnormality frequency measured by the abnormality frequency measuring unit 27, decides the first period 311 or the second period 312, and outputs the decided period.

The transmitting unit 29 reads the measurement data of the period output from the data period setting unit 28 from the measurement data stored in the original data storage unit 22, and transmits the measurement data to the center device 30.

In the center device 30, the receiving unit 31 receives the measurement data transmitted from the data collecting device 20.

The transmitting unit 32 receives the measurement data transmitted from other data collecting devices 20.

The data storage unit 33 stores the measurement data received by the receiving unit 31.

The operating/display unit 34 displays and sets an operating condition of the period setting unit 26. An operator of the measurement data collection system causes an operation screen to be displayed on the operating/display unit 34 and sets various kinds of setting values in accordance with the operation screen. The setting value is input to the control unit 61 via the transmitting unit 35 and the receiving unit 61 of the data collecting device 20. The control unit 61 controls the operation of the period setting unit 26 in according to the setting value set by the operating/display unit 34.

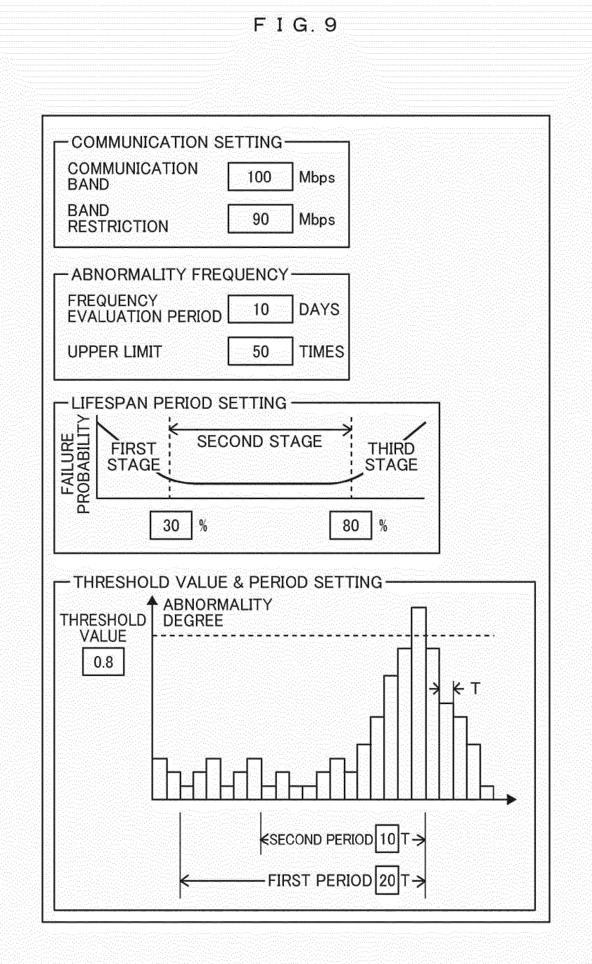

Fig. 9 is an example of the screen of the operating/display unit. A display example of the operating/display unit 34 will be described with reference to Fig. 9.

As illustrated in Fig. 9, a screen in which a communication setting such as a setting of a band of a communication line or a setting of a restricted band is performed is provided. Further, a screen in which a setting of the upper limit of the number of detections of abnormality in the frequency evaluation period and calculation period for calculating the abnormality frequency is performed is provided. Further, a screen in which a setting of the periods such as the first stage 301, the second stage 302, and the third stage 303 is performed as a remaining lifespan period setting is provided. Further, a screen in which the threshold value 320 of the abnormality value and the first period 311 and the second period 312 are set is provided. Fig. 9 is an example of the operation screen and does not limit display content and an input method.

In the abnormality degree calculating unit 23 (Fig. 5), for example, the abnormality degree can be obtained as a fatigue damage degree from a distortion (a stress value or the like) of a machine obtained by a pressure sensor. The fatigue damage degree is obtained by an SN diagram indicating a relation between a stress amplitude and the number of repetitions of up to breakage when sinusoidal repeated stress of a constant amplitude decided by a material, a welding method, or the like is added until a fatigue failure occurs. For a calculation of the fatigue damage degree, a stress waveform is obtained from a distorted waveform acquired from a distortion sensor in the measurement data. The number $n_i$ of repetitions at a stress amplitude i can be obtained by processing the stress waveform on the basis of, for example, a rain flow count technique. A fatigue damage degree D can be indicated by Formula 1 by calculating the number $N_i$ of repetitions until damages occurs at the stress amplitude i from the SN diagram and calculating and accumulating a ratio $(n_i/N_i)$ of $n_i$ and $N_i$ is calculated and accumulated for each stress amplitude.

[Formula 1]

$$D = \sum (n_i/N_i)$$

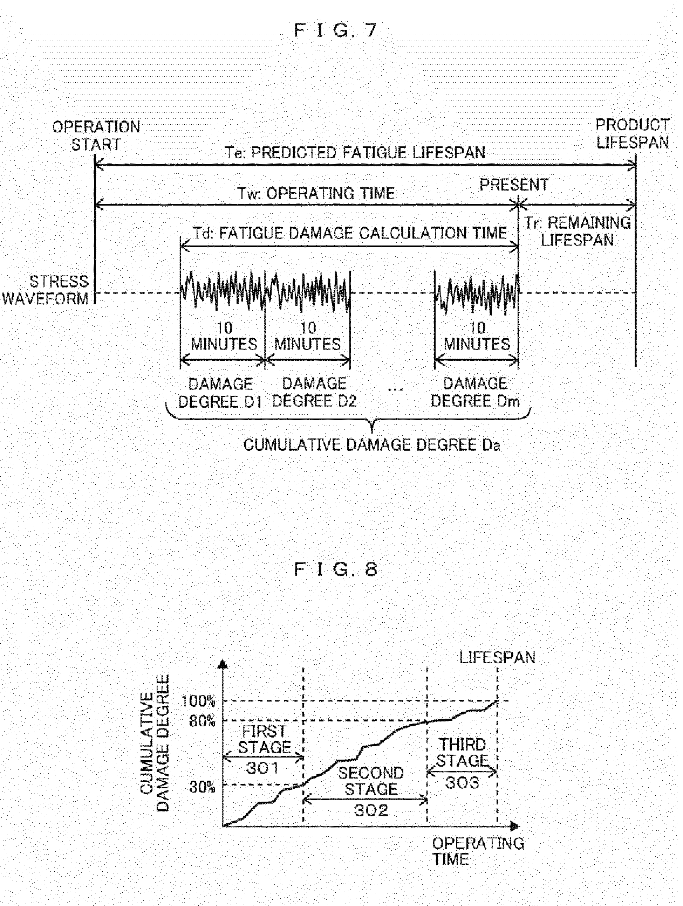

The remaining lifespan calculating unit 24 will be described in detail with reference to Figs. 7 and 8.

Fig. 7 is an explanatory diagram of the remaining lifespan calculation.

Fig. 8 illustrates an example of an abnormality detection setting period according to a cumulative damage degree.

In Fig. 8, for example, fatigue damage degrees D1 to Dm are obtained every 10 minutes from the stress waveform of the measurement data, and a cumulative fatigue damage degree Da can be obtained by accumulating the obtained fatigue damage degrees. When the cumulative fatigue damage degree Da is 1 (100%) or more, it is an index to destroy, and it is the lifespan of a product. For example, a period in which the abnormality damage degree is less than 30% can be defined as the first stage 301, a period in which the abnormality damage degree is 30% or more and less than 80% can be defined as the second stage 302, and a period in which the abnormality damage degree is 80% or more can be defined as the third stage 303.

If a time in which the cumulative fatigue damage degree Da is calculated is indicated by Td, a predicted fatigue lifespan Te can be indicated Formula 2. If an operating time until now is indicated by Tw, a remaining lifespan Tr can be calculated by Formula 3.

[Formula 2]

$$Te = Td/Da$$

[Formula 3]

$$Tr = (1 - Tw/Te)$$

For example, a calculation of an abnormality frequency Na in the abnormality frequency measuring unit 27 is indicated by Formula 4 from a frequency evaluation period Tc which is set in advance and the number Ne of detections of the abnormality (alarm). Further, a frequency threshold value can be obtained from the frequency evaluation period and the upper limit which are input in Fig. 9. For example, when the frequency evaluation period is 10 days, and the upper limit of the abnormality frequencies is 50 times, 50/10 can be calculated as the frequency threshold value.

[Formula 4]

$$Na = Ne/Tc$$

A remaining product lifespan can be measured as described above. For a value at which the cumulative fatigue damage degree Da is 1, preferably, a product lifespan is set from a stress test or a design value by an actual machine, and the same value is set in the case of the same product.

An operation based on the flow chart of Fig. 6 will be described below.

Step S100: The operating/display unit 34 performs an initial setting of the threshold value 320 in the abnormality detecting unit 23, the frequency threshold value in the abnormality frequency measuring unit 27 calculated from the frequency evaluation period and the upper limit, and the first period 311 or the second period 312 selected by the data period setting unit 28.

Step S101: The abnormality degree calculating unit 23 acquires the measurement data from the original data storage unit 22.

Step S102: The abnormality degree calculating unit 23 calculates the abnormality degree from the measurement data.

Step S103: The remaining lifespan calculating unit 24 calculates the remaining lifespan which is a remaining lifespan of up to a design lifespan of a product from the abnormality degree calculated in step S102.

Step S104: The abnormality detecting unit 25 compares the abnormality degree obtained in step S102 with the threshold value set in step S100, and when the abnormality degree is smaller than the threshold value, the process proceeds to step S101. Otherwise, the process proceeds to step S104.

Step S105: The remaining lifespan calculating unit 24 selects the first stage 301, the second stage 302, or the third stage 303 in accordance with the remaining lifespan calculated in step S103. When the remaining lifespan belongs to the first stage 301 or the third stage 303, the process proceeds to step S108. Otherwise, the process proceeds to step S106.

Step S106: The abnormality frequency measuring unit 27 calculates the abnormality frequency of the abnormality (alarm) detected by the abnormality detecting unit 25.

Step S107: When the abnormality frequency calculated in step 106 is the frequency threshold value set in step S100 or more, the abnormality frequency measuring unit 27 causes the process to proceed to step S108. Otherwise, the process proceeds to step S109.

Step S108: The data period setting unit 28 sets the measurement data period to the first period 311.

Step S109: The data period setting unit 28 sets the measurement data period to the second period 312.

Step S110: The transmitting unit 29 reads the measurement data of the first period 311 or the second period 312 set by the data period setting unit 28 from the measurement data stored in the original data storage unit 22, and transmits the measurement data to the center device 30.

In the example of Fig. 6, two types of periods, that is the first period and the second period are selectable, but as described above, it is possible to set the conditions more finely and select three or more periods.

[Second embodiment]

In the present embodiment, the measurement data period is automatically decided instead of setting the measurement data period.

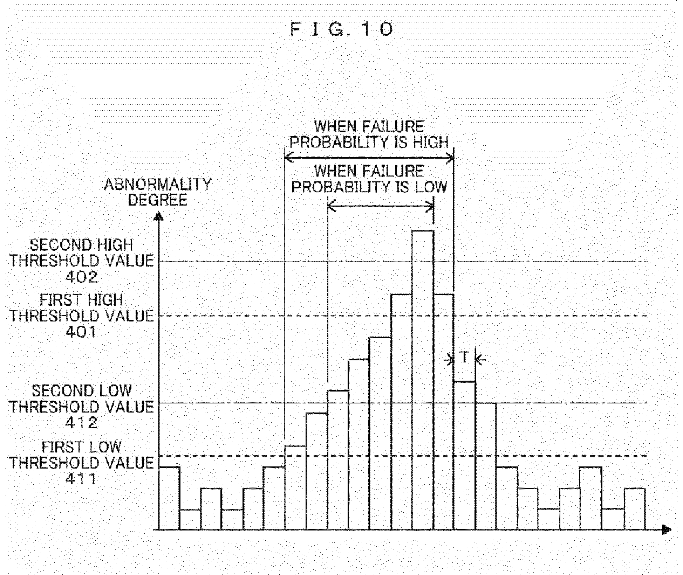

Fig. 10 illustrates a threshold value setting example according to a second embodiment.

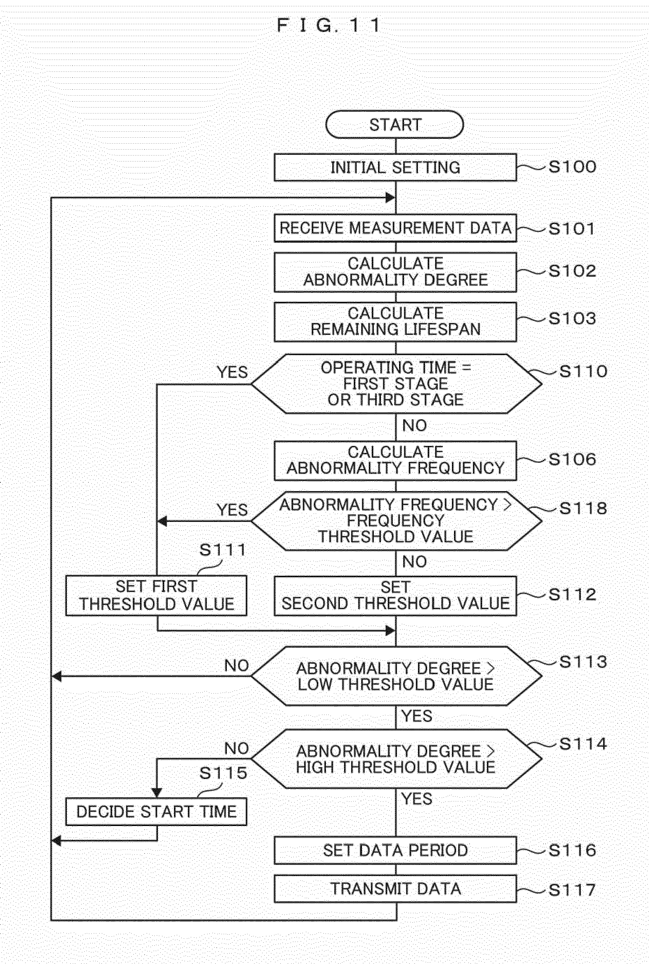

Fig. 11 is a flowchart illustrating an embodiment of a processing procedure according to the second embodiment.

Referring to Fig. 10, the threshold value in abnormality detecting unit 25 includes a first threshold value and a second threshold value, and each of the first threshold value and the second threshold value includes a high threshold value and a low threshold value. The high threshold value of the first threshold value is a first high threshold value 401, the low threshold value of the first threshold value is a first low threshold value 411, the high threshold value of the second threshold value is a second high threshold value 402, and the low threshold value of the second threshold value is a second low threshold value 412. When the failure probability is high, the first high threshold value 401 and the first low threshold value 411 which is the low threshold value are selected. When the failure probability is low, the second high threshold value 402 and the second low threshold value 412 which is the low threshold value are selected.

Fig. 11 will be described focusing on steps that are changed from the first embodiment with reference to Figs. 5 and 10.

Step S100: The operating/display unit 34 performs an initial setting of the threshold value in the abnormality detecting unit 23 and the frequency threshold value of the abnormality frequency in the abnormality frequency measuring unit 27.

Step S110: The remaining lifespan calculating unit 24 decides the first stage 301, the second stage 302, or the third stage 303 in accordance with the remaining lifespan calculated in step S103. When the remaining lifespan is the first stage 301 or the third stage 303, the flow proceeds to step S111. Otherwise, the process proceeds to step S106.

Step S118: When the abnormality frequency calculated in step 106 is the frequency threshold value set in step S100 or more, the abnormality frequency measuring unit 27 causes the process to proceed to step S111. Otherwise, the process proceeds to step S112.

Step S111: The abnormality detecting unit 25 sets the high threshold value to the first high threshold value 401, and sets the low threshold value to the first low threshold value 411.

Step S112: The abnormality detecting unit 25 sets the high threshold value the second high threshold value 402, and sets the low threshold value to the second low threshold value 412.

Step S113: The abnormality detecting unit 25 compares the abnormality degree obtained in the step S102 with the low threshold value, and when the abnormality degree is smaller than the low threshold value, the process proceeds to step S101. Otherwise, the process proceeds to step S114.

Step S114: The abnormality detecting unit 25 compares the abnormality degree obtained in the step S102 with the high threshold value, and when the abnormality degree is smaller than the high threshold value, the process proceeds to step S115. Otherwise, the process proceeds to step S116.

Step S115: The data period setting unit 28 sets a start time of the measurement data period to a time at which the abnormality degree is calculated in step S102.

Step S116: The data period setting unit 28 sets an end time of the measurement data period to the time at which the abnormality degree is calculated in step S102. In other words, the measurement data period is decided in accordance with the start time set in step S115.

Step S117: The transmitting unit 29 reads the measurement data of the measurement data period decided in step S116 from the measurement data stored in the original data storage unit 22, and transmits the measurement data to the center device 30.

As described above, since the two threshold values, that is, the high threshold value and the low threshold value are set, it is possible to automatically decide the period in which the measurement data is transmitted without deciding the measurement data period in advance.

In other words, as illustrated in Fig. 10, when the failure probability is determined to be high, data is transmitted a period from a timing at which the abnormality degree is higher than the first low threshold value 411 to a timing at which the abnormality degree is lower than the second high threshold value 401. When the failure probability is determined to be low, data is transmitted in a period from a timing at which the abnormality degree is higher than the second low threshold value 412 to a timing at which the abnormality degree is lower than the second high threshold value 402. According to such control, when the failure probability is determined to be high, it is possible to transmit more information to the center device than when the failure probability is determined to be low.

In the first and second embodiments, it is possible to transmit only data having a high importance in terms of device maintenance as data to be transmitted from the site (farm) in which the device to be monitored is installed to the center device. Accordingly, even when the communication environment of the site is bad, it is possible to satisfy both requirements of the communication efficiency and the device maintenance.

[Third embodiment]

In the present embodiment, the measurement data amount is not reduced, and instead, the data collecting device 20 adjusts the measurement data to be transmitted through the transmitting unit 29, and the center device 30 sets the measurement data to be stored in the data storage unit 33, and thus the measurement data amount is reduced.

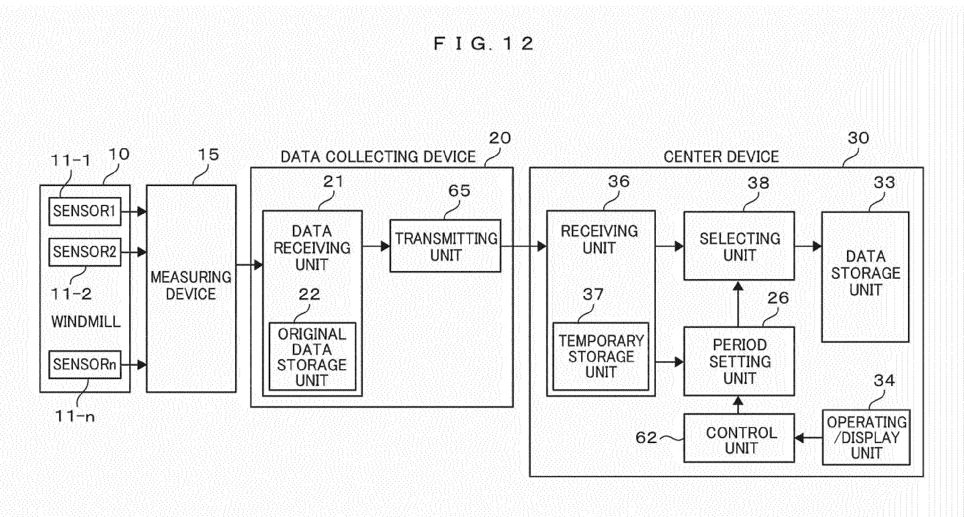

Fig. 12 illustrates a configuration example of a measurement data collection system according to a third embodiment. Operations of respective parts of Fig. 12 will be described with reference back to Fig. 5. The same functions are denoted by the same reference numerals. The following description will proceed focusing on components which are changed from the first embodiment.

The data collecting device 20 includes a data receiving unit 21 and a transmitting unit 65.

The center device includes a receiving unit 36, a selecting unit 38, a period setting unit 26, a control unit 62, a data storage unit 33, and an operating/display unit 34. The receiving unit 36 includes a temporary storage unit 37.

In the data collecting device 20, the transmitting unit 65 transmits the measurement data stored in the original data storage unit 22 to the center device 30.

In the center device 30, the receiving unit 36 receives the measurement data transmitted by the transmitting unit 65, and stores the received measurement data in the temporary storage unit 37.

The period setting unit 26 reads the measurement data from the temporary storage unit 37 and sets the period of the measurement data to be stored in the data storage unit 33.

The selecting unit 38 reads the measurement data of the period set by the period setting unit 26 from the temporary storage unit 37 and stores the measurement data in the data storage unit 33.

As described above, in the center device 30, it is possible to store all pieces of the measurement data in the short term and reduce the measurement data amount for long-term storage necessary for maintenance.

In the first to third embodiments, the fatigue damage degree has been described as an example of the abnormality degree, but for example, a temperature of a generator may be used as the abnormality degree.

For example, it is also possible to learn a probability distribution of the fatigue damage degree for a wind speed in advance and use a degree of deviation from the probability distribution as the fatigue damage degree of each wind speed. Measurement data used the abnormality degree is not limited. Further, the number of pieces of measurement data used the abnormality degree is not limited.

As a method of detecting an abnormality, a method of determining the abnormality by learning a distribution model of the abnormality degree under normal circumstances from the measurement data and calculating a distance of the abnormality degree from a normal model is also used. For example, there are methods of learning the normal model such as a Mahalanobis-Taguchi technique, a regression analysis technique, a nearest neighbor technique, and an SVM. A method of detecting an abnormality is not limited.

Further, the method of obtaining the remaining lifespan from the fatigue damage degree has been described, but it is also possible to decide the remaining lifespan in accordance with the operating time. A method of calculating the remaining lifespan is not limited.

Further, the method of setting the period in which the measurement data is transmitted for each windmill has been described, but for example, it is also possible to set a period in which other windmills in the wind farm transmit the measurement data in accordance with a windmill which is high in an abnormality (alarm) occurrence frequency.

The three periods, that is, the first stage 301, the second stage 302, and the third stage 303 have been described as the remaining lifespan setting period, but a period to be set is not limited.

Further, the example in which the period of the measurement data is set in the period setting unit 26 has been described, but it does not limit an example in which all pieces of measurement data are a setting target. It is also possible to select the measurement data serving as the period setting target to be read out.

The example in which the period setting unit 26 sets a period before the abnormality is detected as the period of the measurement data, but a period before the abnormality is detected may be set.

Furthermore, at the time of transmission, even in a period in which an abnormality is not detected, it is also possible to thin out measurement data, for example, through data compression based on lossy compression at the time of compression or resampling.

The present invention is not limited to the above embodiments but includes various modifications. For example, the above embodiments have been described in detail in order to help understanding of the present invention and are not necessarily limited to a configuration necessarily including all the components described above. Further, some components of a certain embodiment may be replaced with components of another embodiment, and components of another embodiment may be added to components of a certain embodiment. Further, addition, deletion, or substitution of other components may be performed on some components of each embodiment.

Further, the above-described components, functions, processing units, processing means, and the like may be partially or entirely implemented by hardware, for example, by designing with an integrated circuit (IC). Further, the above-described components, functions, and the like may be implemented by software by interpreting and executing a program causing a processor to execute each function. Information such as a program, a table, a file, or the like that implements each function may be stored in a storage device such as a memory, a hard disk, a solid state drive (SSD), or the like or a storage medium such as an IC card, an SD card, or a DVD.

The above information processing function may be configured with a single computer, or an arbitrary part of the input device, the output device, the processing device, or the storage device may be configured with another computer connected by a network or the like.

Further, components described in a singular form in this specification include a plural form thereof unless otherwise stated clearly by a special context.

REFERENCE SIGNS LIST

| | |
|---|---|
| 1A, 1B | wind farm |
| 10 | windmill |
| 11-1 to 11-n | sensor |
| 12 | communication line |
| 15 | measuring device |
| 20 | data collecting device |
| 21 | data receiving unit |
| 22 | original data storage unit |
| 23 | abnormality degree calculating unit |
| 24 | remaining lifespan calculating unit |
| 25 | abnormality detecting unit |
| 26 | period setting unit |
| 27 | abnormality frequency measuring unit |
| 28 | data period setting unit |
| 29 | transmitting unit |
| 30 | center device |
| 31, 32 | receiving unit |
| 33 | data storage unit |
| 34 | operating/display unit |
| 35 | transmitting unit |
| 40 | network |
| 61 | receiving unit |
| 62 | control unit |

**Claims**

**1.** A data collection system, comprising:

a data receiving unit (21) that acquires a chronological measurement value acquired from at least one sensor installed in a device;
an abnormality degree calculating unit (23) that calculates an abnormality degree on the basis of the measurement value;
an abnormality detecting unit (25) that detects an abnormality on the basis of the abnormality degree;
an abnormality frequency measuring unit (27) that measures an abnormality frequency on the basis of the detected abnormality;
a remaining lifespan calculating unit (24) that calculates a remaining lifespan on the basis of the abnormality degree;
a data period setting unit (28) that controls a data period on the basis of the abnormality frequency and the remaining lifespan of the device; and
at least one of a transmitting unit (29, 35) that transmits the measurement value in the data period and a data storage unit (33) that stores the measurement value in the data period.

**2.** The data collection system according to claim 1, wherein the data period setting unit (28) controls the data period by selecting from a plurality of predetermined data periods.

**3.** The data collection system according to claim 1, wherein the abnormality detecting unit (25) is configured to determine the presence or absence of an abnormality by comparing the abnormality degree with a threshold value, and
the data period setting unit (28) controls the threshold value of the abnormality detecting unit (25) and sets, as the data period, a period from a timing at which the abnormality value is larger than the controlled threshold value to a timing at which the abnormality value is smaller than the controlled threshold value.

**4.** The data collection system according to claim 1, further comprising,
a data collecting device including the data receiving unit (21), the abnormality degree calculating unit (23), the abnormality detecting unit (25), the abnormality frequency measuring unit (27), the remaining lifespan calculating unit (24), the data period setting unit (28), and the transmitting unit (29, 35),
wherein the transmitting unit (29, 35) transmits the measurement value in the data period to a center device (30) connected via a communication line.

**5.** The data collection system according to claim 1, further comprising,
a data collecting device including the data receiving unit (21) and the data collecting device; and
a center device (30) including the abnormality degree calculating unit (23), the abnormality detecting unit (25), the abnormality frequency measuring unit (27), the remaining lifespan calculating unit (24), and the data period setting unit (28),

wherein the transmitting unit (29, 35) of the data collecting device transmits the measurement value to the center device (30) connected via a communication line, and

the center device (30) includes

a center side receiving unit that receives the transmitted measurement value,

a temporary storage unit that stores the received measurement value,

a selecting unit that selects a measurement value in a data period set by the data period setting unit (28) among measurement values stored in the temporary storage unit, and

a data storage unit (33) that stores the measurement value selected by the selecting unit.

6. The data collection system according to claim 1, wherein a plurality of sensors are arranged for each measured target,

one or more measuring devices that collect the measurement values of the plurality of sensors chronologically for each measured target,

the data collection system comprises at least one of a wireless line and a wired line that allows the measuring device to transmit the measurement value to the data collecting device, and

the data collecting device comprises an original data storage unit that receives the measurement value transmitted via the at least one of the wireless line and the wired line through the data receiving unit (21) and stores the received measurement value.

7. The data collection system according to claim 1, wherein the data period setting unit (28) divides a remaining lifespan of a measured target on the basis of the remaining lifespan such that a period immediately after an operation starts is a first stage, a period immediately before a product lifespan is a third stage, and a period between the first stage and the third stage is a second period, and

when the abnormality frequency does not exceed a predetermined threshold value,

the data period is controlled such that data periods of the first stage and the third stage are larger than a data period of the second stage.

8. The data collection system according to claim 7, wherein, when the abnormality frequency exceeds the predetermined threshold value,

the data period setting unit (28) controls the data period such that the data period of the second stage is the data periods of the first stage and the third stage or more.

9. A data collection method of collecting chronological measurement data from one or more sensors installed in a device, comprising:

a first step of receiving measurement data from the sensors;

a second step of calculating an abnormality degree from the inputted measurement data;

a third step of calculating a remaining lifespan of the device from the abnormality degree;

a fourth step of detecting an abnormality from the abnormality degree;

a fifth step of determining one of predetermined periods corresponding to the remaining lifespan calculated in the third step;

a sixth step of calculating a frequency of the abnormality detected in the fourth step; and

a seventh step of controlling at least one of a data period of the measurement data to be transmitted and a data period of the measurement data to be stored on the basis of both the period determined in the fifth step and the frequency of the abnormality calculated in the sixth step.

10. The data collection method according to claim 9, wherein the seventh step includes controlling the data period by selecting a data period to be applied from data periods which are set in advance.

11. The data collection method according to claim 9, wherein the seventh step includes controlling a threshold value for performing abnormality detection in the fourth step and controlling the data period such that measurement data corresponding to the detected abnormality is included.

12. The data collection method according to claim 9, wherein the first to sixth steps are executed by a data collecting device connected with the device via at least one of a wireless line and a wired line,

the data collecting device is connected to a center device (30) via a communication line, and

the measurement data is transmitted to the center device (30) by the data period controlled in the seventh step.

13. The data collection method according to claim 9, wherein the measurement data is transmitted from a data collecting device connected with the device via at least one of a wireless line and a wired line to a center device (30) via a communication line,

the first to sixth steps are executed by the center device (30), and

the center device (30) stores the measurement data by the data period controlled in the seventh step.

**Patentansprüche**

1. Datensammelsystem, das Folgendes umfasst:

   eine Datenempfangseinheit (21), die einen chronologischen Messwert erfasst, der von mindestens einem Sensor, der in einer Vorrichtung installiert ist, erfasst wurde;
   eine Anomaliegradberechnungseinheit (23), die einen Anomaliegrad auf der Grundlage des Messwerts berechnet;
   eine Anomaliedetektionseinheit (25), die eine Anomalie auf der Grundlage des Anomaliegrads detektiert;
   eine Anomaliefrequenzmesseinheit (27), die eine Anomaliefrequenz auf der Grundlage der detektierten Anomalie misst;
   eine Restlebensdauerberechnungseinheit (24), die eine Restlebensdauer auf der Grundlage des Anomaliegrads berechnet;
   eine Datenfristsetzeinheit (28), die eine Datenfrist auf der Grundlage der Anomaliefrequenz und der Restlebensdauer der Vorrichtung steuert; und
   eine Sendeeinheit (29, 35), die die Messwerte in der Datenfrist sendet, und/oder eine Datenspeichereinheit (33), die die Messwerte in der Datenfrist speichert.

2. Datensammelsystem nach Anspruch 1, wobei die Datenfristsetzeinheit (28) die Datenfrist durch Wählen aus mehreren vorgegebenen Datenfristen steuert.

3. Datensammelsystem nach Anspruch 1, wobei die Anomaliedetektionseinheit (25) konfiguriert ist, das Vorliegen oder das Fehlen einer Anomalie durch Vergleichen des Anomaliegrads mit einem Schwellenwert zu bestimmen und die Datenfristsetzeinheit (28) den Schwellenwert der Anomaliedetektionseinheit (25) steuert und als die Datenfrist einen Zeitraum von einem Zeitpunkt, zu dem der Anomaliewert größer als der gesteuerte Schwellenwert ist, zu einem Zeitpunkt, zu dem der Anomaliewert kleiner als der gesteuerte Schwellenwert ist, setzt.

4. Datensammelsystem nach Anspruch 1, das ferner Folgendes umfasst:

   eine Datensammeleinrichtung, die die Datenempfangseinheit (21), die Anomaliegradberechnungseinheit (23), die Anomaliedetektionseinheit (25), die Anomaliefrequenzmesseinheit (27), die Restlebensdauerberechnungseinheit (24), die Datenfristsetzeinheit (28) und die Sendeeinheit (29, 35) enthält, wobei die Sendeeinheit (29, 35) den Messwert in der Datenfrist zu einer Zentraleinrichtung (30), die über eine Kommunikationsleitung verbunden ist, sendet.

5. Datensammelsystem nach Anspruch 1, das ferner Folgendes umfasst:

   eine Datensammeleinrichtung, die die Datenempfangseinheit (21) und die Datensammeleinrichtung enthält; und
   eine Zentraleinrichtung (30), die die Anomaliegradberechnungseinheit (23), die Anomaliedetektionseinheit (25), die Anomaliefrequenzmesseinheit (27), die Restlebensdauerberechnungseinheit (24) und die Datenfristsetzeinheit (28) enthält, wobei
   die Sendeeinheit (29, 35) der Datensammeleinrichtung den Messwert zur Zentraleinrichtung (30), die über eine Kommunikationsleitung verbunden ist, sendet und
   die Zentraleinrichtung (30) Folgendes enthält:

   eine zentrumsseitige Empfangseinheit, die den gesendeten Messwert empfängt,
   eine vorübergehende Speichereinheit, die die empfangenen Messwerte speichert,
   eine Wahleinheit, die einen Messwerte in einer Datenfrist, die durch die Datenfristsetzeinheit (28) gesetzt wird, unter Messwerten, die in der vorübergehenden Speichereinheit gespeichert sind, wählt, und
   eine Datenspeichereinheit (33), die die Messwerte, die durch die Wahleinheit gewählt werden, speichert.

6. Datensammelsystem nach Anspruch 1, wobei für jedes Messziel mehrere Sensoren angeordnet sind,
   eine oder mehrere Messeinrichtungen die Messwerte der mehreren Sensoren für jedes Messziel chronologisch sammeln,
   das Datensammelsystem eine drahtlose Leitung und/oder eine verdrahtete Leitung umfasst, die der Messeinrichtung ermöglichen, den Messwert zur Datensammeleinrichtung zu senden, und
   die Datensammeleinrichtung eine Ursprungsdatenspeichereinheit umfasst, die die Messwerte, die über die drahtlose Leitung und/oder die drahtgebundene Leitung gesendet werden, durch die Datenempfangseinheit (21) empfängt und die empfangenen Messwerte speichert.

7. Datensammelsystem nach Anspruch 1, wobei die Datenfristsetzeinheit (28) eine Restlebensdauer eines Messziels auf der Grundlage der Restlebensdauer derart unterteilt, dass eine Frist unmittelbar nachdem ein Betrieb beginnt ein erster Zustand ist, eine Frist unmittelbar vor einer Produktlebensdauer ein dritter Zustand ist und eine Frist zwischen dem ersten Zustand und dem dritten Zustand eine zweite Frist ist, und

dann, wenn die Anomaliefrequenz einen vorgegebenen Schwellenwert nicht überschreitet,

die Datenfrist derart gesteuert wird, dass Datenfirsten des ersten Zustands und des dritten Zustands größer als eine Datenfrist des zweiten Zustands sind.

8.  Datensammelsystem nach Anspruch 7, wobei
    dann, wenn die Anomaliefrequenz den vorgegebenen Schwellenwert überschreitet,
    die Datenfristsetzeinheit (28) die Datenfrist derart steuert, dass die Datenfrist des zweiten Zustands den Datenfristen des ersten Zustands und des dritten Zustands entsprechen oder größer sind.

9.  Datensammelverfahren zum Sammeln chronologischer Messdaten von einem oder mehreren Sensoren, die in einer Einrichtung installiert sind, das Folgendes umfasst:

    einen ersten Schritt des Empfangens von Messdaten von den Sensoren;
    einen zweiten Schritt des Berechnens eines Anomaliegrads aus den eingegebenen Messdaten;
    einen dritten Schritt des Berechnens einer verbleibenden Lebensdauer der Einrichtung aus dem Anomaliegrad;
    einen vierten Schritt des Detektierens einer Anomalie aus dem Anomaliegrad;
    einen fünften Schritt des Bestimmens einer von vorgegebenen Fristen, die der verbleibenden Lebensdauer, die im dritten Schritt berechnet wurde, entspricht;
    einen sechsten Schritt des Berechnens einer Frequenz der Anomalie, die im vierten Schritt detektiert wurde; und
    einen siebten Schritt des Steuerns einer Datenfrist der Messdaten, die gesendet werden sollen, und/oder eine Datenfrist der Messdaten, die gespeichert werden sollen, auf der Grundlage sowohl der Frist, die im fünften Schritt bestimmt wurde, als auch der Frequenz der Anomalie, die im sechsten Schritt berechnet wurde.

10. Datensammelverfahren nach Anspruch 9, wobei der siebte Schritt ein Steuern der Datenfrist durch Wählen einer Datenfrist, die angewendet werden soll, aus Datenfristen, die im Voraus gesetzt werden, umfasst.

11. Datensammelverfahren nach Anspruch 9, wobei der siebte Schritt ein Steuern eines Schwellenwerts zum Durchführen einer Anomaliedetektion im vierten Schritt und ein Steuern der Datenfrist derart, dass Messdaten, die der detektierten Anomalie entsprechen, enthalten sind, umfasst.

12. Datensammelverfahren nach Anspruch 9, wobei der erste bis sechste Schritt durch eine Datensammeleinrichtung, die mit der Einrichtung über eine drahtlose Leitung und/oder eine drahtgebundene Leitung verbunden ist, ausgeführt werden,
    die Datensammeleinrichtung mit einer Zentraleinrichtung (30) über eine Kommunikationsleitung verbunden ist und
    die Messdaten durch die Datenfrist, die im siebten Schritt gesteuert wird, zur Zentraleinrichtung (30) gesendet werden.

13. Datensammelverfahren nach Anspruch 9, wobei die Messdaten von einer Datensammeleinrichtung, die mit der Einrichtung über eine drahtlose Leitung und/oder eine drahtgebundene Leitung zu einer Zentraleinrichtung (30) über eine Kommunikationsleitung verbunden ist, gesendet werden,
    der erste bis sechste Schritt durch die Zentraleinrichtung (30) ausgeführt werden und
    die Zentraleinrichtung (30) die Messdaten durch die Datenfrist, die im siebten Schritt gesteuert wird, speichert.

**Revendications**

1.  Système de collecte de données, comprenant :

    une unité de réception de données (21) qui acquiert une valeur de mesure chronologique acquise à partir d'au moins un capteur installé dans un dispositif ;
    une unité de calcul de degré d'anomalie (23) qui calcule un degré d'anomalie sur la base de la valeur de mesure ;
    une unité de détection d'anomalie (25) qui détecte une anomalie sur la base du degré d'anomalie ;
    une unité de mesure de fréquence d'anomalie (27) qui mesure une fréquence d'anomalie sur la base de l'anomalie détectée ;
    une unité de calcul de durée de vie restante (24) qui calcule une durée de vie restante sur la base du degré d'anomalie ;
    une unité de réglage de période de données (28) qui commande une période de données sur la base de la fréquence d'anomalie et de la durée de vie restante du dispositif ; et
    au moins une unité parmi une unité de transmission (29, 35) qui transmet la valeur de mesure dans la période de données et une unité de stockage de données (33) qui stocke la valeur de mesure dans la période de données.

**2.** Système de collecte de données selon la revendication 1,
dans lequel l'unité de réglage de période de données (28) commande la période de données en sélectionnant à partir d'une pluralité de périodes de données prédéterminées.

**3.** Système de collecte de données selon la revendication 1,
dans lequel l'unité de détection d'anomalie (25) est configurée pour déterminer la présence ou l'absence d'une anomalie en comparant le degré d'anomalie à une valeur seuil, et
l'unité de réglage de période de données (28) commande la valeur seuil de l'unité de détection d'anomalie (25) et règle, à titre de période de données, une période depuis un instant auquel la valeur d'anomalie est supérieure à la valeur seuil commandée jusqu'à un instant auquel la valeur d'anomalie est inférieure à la valeur seuil commandée.

**4.** Système de collecte de données selon la revendication 1, comprenant en outre :

un dispositif de collecte de données incluant l'unité de réception de données (21), l'unité de calcul de degré d'anomalie (23), l'unité de détection d'anomalie (25), l'unité de mesure de fréquence d'anomalie (27), l'unité de calcul de durée de vie restante (24), l'unité de réglage de période de données (28), et l'unité de transmission (29, 35),
dans lequel l'unité de transmission (29, 35) transmet la valeur de mesure dans la période de données à un dispositif central (30) connecté via une ligne de communication.

**5.** Système de collecte de données selon la revendication 1, comprenant en outre :

un dispositif de collecte de données incluant l'unité de réception de données (21) et le dispositif de collecte de données ; et
un dispositif central (30) incluant l'unité de calcul de degré d'anomalie (23), l'unité de détection d'anomalie (25), l'unité de mesure de fréquence d'anomalie (27), l'unité de calcul de durée de vie restante (24), et l'unité de réglage de période de données (28),
dans lequel l'unité de transmission (29, 35) du dispositif de collecte de données transmet la valeur de mesure au dispositif central (30) connecté via une ligne de communication, et
le dispositif central (30) inclut
une unité de réception côté central qui reçoit la valeur de mesure transmise,
une unité de stockage temporaire qui stocke la valeur de mesure reçue,

une unité de sélection qui sélectionne une valeur de mesure dans une période de données réglée par l'unité de réglage de période de données (28) parmi des valeurs de mesure stockées dans l'unité de stockage temporaire, et
une unité de stockage de données (33) qui stocke la valeur de mesure par l'unité de sélection.

**6.** Système de collecte de données selon la revendication 1,
dans lequel une pluralité de capteurs sont agencés pour chaque cible mesurée,
comprenant un ou plusieurs dispositifs de mesure qui collectent les valeurs de mesure de la pluralité de capteurs chronologiquement pour chaque cible mesurée,
le système de collecte de données comprend au moins une ligne parmi une ligne sans fil et une ligne avec fil qui permet au dispositif de mesure de transmettre la valeur de mesure au dispositif de collecte de données, et
le dispositif de collecte de données comprend une unité de stockage de données d'origine qui reçoit la valeur de mesure transmise via ladite au moins une ligne parmi la ligne sans fil et la ligne avec fil via l'unité de réception de données (21) et qui stocke la valeur de mesure reçue.

**7.** Système de collecte de données selon la revendication 1,
dans lequel l'unité de réglage de période de données (28) divise une durée de vie restante d'une cible mesurée sur la base de la durée de vie restante de sorte qu'une période immédiatement après qu'une opération commence est un premier stade, une période immédiatement avant une durée de vie de produit est un troisième stade, et une période entre le premier stade et le troisième stade est une deuxième période, et
quand la fréquence d'anomalie n'excède pas une valeur seuil prédéterminée,
la période de données est commandée de sorte que les périodes de données du premier stade et du troisième stade sont plus longues qu'une période de données du deuxième stade.

**8.** Système de collecte de données selon la revendication 7,
dans lequel, quand la fréquence d'anomalie excède la valeur seuil prédéterminée,
l'unité de réglage de période de données (28) commande la période de données de sorte que la période de données du deuxième stade est les périodes de données du premier stade et du troisième stade ou plus.

**9.** Procédé de collecte de données consistant à collecter des données de mesure chronologiques à partir d'un ou de plusieurs capteurs installés dans un dispositif, comprenant :

une première étape consistant à recevoir des données de mesure à partir des capteurs ;
une deuxième étape consistant à calculer un degré d'anomalie à partir des données de mesure entrées ;
une troisième étape consistant à calculer une durée de vie restante du dispositif à partir du degré d'anomalie ;
une quatrième étape consistant à détecter une anomalie à partir du degré d'anomalie ;
une cinquième étape consistant à déterminer une des périodes prédéterminées correspondant à la durée de vie restante calculée dans la troisième étape ;
une sixième étape consistant à calculer une fréquence de l'anomalie détectée dans la quatrième étape ; et
une septième étape consistant à commander au moins une période parmi une période de données des données de mesure devant être transmises et une période de données des données de mesure devant être stockées sur la base à la fois de la période déterminée dans la cinquième étape et de la fréquence de l'anomalie calculée dans la sixième étape.

10. Procédé de collecte de données selon la revendication 9,
dans lequel la septième étape inclut l'opération consistant à commander la période de données en sélectionnant une période de données devant être appliquée à partir des périodes de données qui sont réglées à l'avance.

11. Procédé de collecte de données selon la revendication 9,
dans lequel la septième étape inclut l'opération consistant à commander une valeur seuil pour effectuer une détection d'anomalie dans la quatrième étape et pour commander la période de données de sorte que des données de mesure correspondant à l'anomalie détectée sont incluses.

12. Procédé de collecte de données selon la revendication 9,
dans lequel les étapes 1 à 6 sont exécutées par un dispositif de collecte de données connecté au dispositif via au moins une ligne parmi une ligne sans fil et une ligne avec fil,
le dispositif de collecte de données est connecté un dispositif central (30) via une ligne de communication, et
les données de mesure sont transmises au dispositif central (30) sur la période de données commandée dans la septième étape.

13. Procédé de collecte de données selon la revendication 9,
dans lequel les données de mesure sont transmises à partir d'un dispositif de collecte de données connecté au dispositif via au moins une ligne parmi une ligne sans fil et une ligne avec fil jusqu'à un dispositif central (30) via une ligne de communication,
les étapes 1 à 6 sont exécutées par le dispositif central (30), et
le dispositif central (30) stocke les données mesurées sur la période de données commandée dans la septième étape.

F I G . 1

FIRST STAGE 301

SECOND STAGE 302

THIRD STAGE 303

FAILURE PROBABILITY

LIFESPAN

OPERATING TIME

F I G . 2

FIRST STAGE 301

SECOND STAGE 302

THIRD STAGE 303

ABNORMALITY DEGREE

ABNORMALITY DETECTION

THRESHOLD VALUE 320

FIRST PERIOD 311

SECOND PERIOD 312

OPERATING TIME

F I G . 3

SECOND STAGE 302

ABNORMALITY DETECTION

ABNORMALITY DEGREE

THRESHOLD VALUE 320

SECOND PERIOD 312

ABNORMALITY FREQUENCY CALCULATION

FIRST PERIOD 311

OPERATING TIME

FAILURE PROBABILITY

OPERATING TIME

16

F I G. 4

F I G. 5

EP 3 309 682 B1

F I G. 6

```
                    ┌─────────────┐
                    │    START    │
                    └──────┬──────┘
                    ┌──────┴──────────┐
                    │ INITIAL SETTING │─── S100
                    └──────┬──────────┘
                    ┌──────┴──────────────────┐
                    │ RECEIVE MEASUREMENT DATA │─── S101
                    └──────┬──────────────────┘
                    ┌──────┴──────────┐
                    │   CALCULATE     │─── S102
                    │ ABNORMALITY DEGREE │
                    └──────┬──────────┘
                    ┌──────┴──────────┐
                    │   CALCULATE     │─── S103
                    │ REMAINING LIFESPAN │
                    └──────┬──────────┘
```

NO ◀─── ABNORMALITY DEGREE >
ABNORMALITY
THRESHOLD VALUE ─── S104

YES

YES ◀─── OPERATING TIME =
FIRST STAGE
OR THIRD STAGE ─── S105

NO

CALCULATE
ABNORMALITY FREQUENCY ─── S106

YES ◀─── ABNORMALITY FREQUENCY >
FREQUENCY
THRESHOLD VALUE ─── S107

NO

S108

SET FIRST PERIOD

SET SECOND PERIOD ─── S108

TRANSMIT DATA ─── S109

F I G. 7

OPERATION START
PRODUCT LIFESPAN

Te: PREDICTED FATIGUE LIFESPAN

Tw: OPERATING TIME

PRESENT

Td: FATIGUE DAMAGE CALCULATION TIME

Tr: REMAINING LIFESPAN

STRESS WAVEFORM

10 MINUTES | 10 MINUTES | 10 MINUTES

DAMAGE DEGREE D1    DAMAGE DEGREE D2    ...    DAMAGE DEGREE Dm

CUMULATIVE DAMAGE DEGREE Da

F I G. 8

LIFESPAN

CUMULATIVE DAMAGE DEGREE

100%
80%

FIRST STAGE
301

30%

SECOND STAGE
302

THIRD STAGE
303

OPERATING TIME

F I G. 9

F I G. 1 0

WHEN FAILURE PROBABILITY IS HIGH

WHEN FAILURE PROBABILITY IS LOW

ABNORMALITY DEGREE

SECOND HIGH THRESHOLD VALUE 402

FIRST HIGH THRESHOLD VALUE 401

SECOND LOW THRESHOLD VALUE 412

FIRST LOW THRESHOLD VALUE 411

T

## F I G . 1 1

```
                          START

              INITIAL SETTING          ~S100

         RECEIVE MEASUREMENT DATA      ~S101

               CALCULATE               ~S102
           ABNORMALITY DEGREE

               CALCULATE               ~S103
           REMAINING LIFESPAN

  YES        OPERATING TIME =          ~S110
             FIRST STAGE
             OR THIRD STAGE
                   NO

               CALCULATE               ~S106
          ABNORMALITY FREQUENCY

         ABNORMALITY FREQUENCY >       ~S118
  YES        FREQUENCY
             THRESHOLD VALUE
                   NO
  S111
  SET FIRST          SET               ~S112
  THRESHOLD    SECOND THRESHOLD VALUE
  VALUE

  NO      ABNORMALITY DEGREE >         ~S113
          LOW THRESHOLD VALUE
                  YES

  NO      ABNORMALITY DEGREE >         ~S114
          HIGH THRESHOLD VALUE
  S115
  DECIDE START TIME      YES

              SET DATA PERIOD          ~S116

              TRANSMIT DATA            ~S117
```

EP 3 309 682 B1

**EP 3 309 682 B1**

**Patent documents cited in the description**

- US 20130097128 A
- JP 2002180502 A
- US 2014195184 A1